# EUROPEAN PATENT SPECIFICATION

(11) **EP 1 222 985 B1**
(45) Date of publication and mention of the grant of the patent: **01.04.2009**
(21) Application number: 02000384.4
(22) Date of filing: 07.01.2002
(51) Int. Cl.: B23B 31/16

(54) **Chuck unit for machine tool**
Futtereinheit für Werkzeugmaschine
Unité de mandrin pour machine-outil

(30) Priority: 11.01.2001 JP 2001004149; 05.09.2001 JP 2001269361
(43) Date of publication of application: 17.07.2002
(73) Proprietor: YAMAZAKI MAZAK KABUSHIKI KAISHA, Niwa-gun Aichi-ken (JP)
(72) Inventor: Yamasaki, Tsunehiko, Nagoya-shi, Aichi-ken (JP); Koike, Haruhiko, Gifu-shi, Gifu-ken (JP); Yamamoto, Noboru, Komaki-shi, Aichi-ken (JP)
(74) Representative: Bauer, Wulf

(56) References cited:
- DE-A- 3 011 267
- DE-C- 19 755 517
- FR-A- 911 430
- US-A- 2 515 329
- US-A- 3 151 871
- US-A- 3 481 614
- US-A- 4 637 620
- US-A- 5 690 323

## Description

This invention relates to a chuck unit for a machine tool in accordance with the generic portion of claim 1. Such a chuck unit is known from US 5 690 323 A. The chuck unit is capable of holding a workpiece having a section which is a circular shape and having a shape excluding a circular shape.

Recently, the machining contents in a machine tool, such as a lathe, tend to be complicated and to advance highly, and various machining, such as milling machining, fraise machining, drilling machining are possible in addition to mere lathe turning.

But, for more efficient machining, it is desirable to finish all machining on a workpiece in the same machine tool in such a manner that a workpiece after a first routine of machining held by a first chuck unit is delivered to a second chuck unit facing the first chuck unit so as to hold the machined portion in the first routine of machining by the second chuck unit, and a second routine of machining is executed on the portion which has not yet been machined, which has been held by the first chuck unit.

In such a case, the portion of the workpiece to be held by the second chuck unit is one on which the first routine of machining has already finished, and the sectional shape is not always a circular shape, but may have various shapes. In particular, when machining contents are diversified in recent years, the sectional shape is not a circular shape in most cases, and it is necessary to execute the second routine of machining by properly holding even such a workpiece.

In a conventional method of using raw jaws, it is necessary to machine raw jaws every change of a workpiece, and it is not efficient, and it is not proper to machine various kinds of workpieces. Then, the development of the chuck unit capable of properly holding a workpiece having various sectional shapes without troublesome work, such as machining of raw jaws is desired.

German patent No.19 755 517 discloses such a technique that a plurality of workpiece holding rods is provided at a workpiece holding member, such as a jaw, being free to move in a radial direction, and a workpiece having various shapes is held by such workpiece holding rods. Since at least two or more such workpiece holding members are installed in a chuck unit for machine tool, with what structure many workpiece holding rods of these workpiece holding members are driven and how to execute driving operation of the workpiece holding rod and its fixing operation are problems which have not yet been solved.

If the workpiece holding rods of the respective workpiece holding members are operated, every workpiece holding member at the time of moving and driving the workpiece holding rods, holding a workpiece takes longer time. Furthermore, if moving and driving of the workpiece holding rod and fixing operation for fixing the workpiece holding rod moved to a predetermined position are executed with respectively different driving means, it is necessary to operate driving means at two places concerning each workpiece holding member. So, it is very troublesome, and is not of practical use.

The object of the present invention is to provide a chuck unit for machine tool capable of properly holding a workpiece having various sectional shapes in addition to a circular section, and capable of executing moving and driving operation and fixing operation of the workpiece holding rods by a simple operation from an outside, taking the above-mentioned circumstances into consideration. This object is solved by the chuck unit with the features of claim 1.

A workpiece can be held by the workpiece holding rods through a portion machined in various sectional shapes excluding circular shape. The workpiece having machining sectional shape excluding circular shape can be machined without raw jaws, holding machined irregular sectional portion. Therefore, a first routine of machining and a second routine of machining can be successively executed with a single machine tool, delivering the workpiece between spindles, and the efficiency of machining work can be rapidly improved.

The workpiece holding rod can be fixed by the fixing means of the workpiece holding rod in the state of holding the workpiece. So, it is not necessary to make the workpiece holding rod follow the outer shape of the workpiece every time of holding the workpiece, when a plurality of workpieces having the same shape is successively machined. Then, time of delivering the workpiece can be shortened and the productivity can be improved.

Furthermore, the cylinders and the fixing means of each workpiece holding member are respectively communicated and connected with each other. So, all of the workpiece holding members can be driven by operating only one place of the outside fluid supply means and the fixing means of the workpiece holding rod, thereby the operation of the workpiece holding rod at the time of delivering the workpiece can be executed in a short time without operating all of the workpiece holding members even if the workpiece having different sectional shape is held every time.

According to claim 2, the respective workpiece holding members are communicated and connected with each other, and the outside fluid supply means serves as the valve means for changing supply form of the fluid for driving the workpiece holding rod and the supply means of the working fluid. Then, the workpiece can be delivered in a short time, and the chuck unit can be made smaller. Besides, moving and driving operation and fixing operation of the workpiece holding rods can be executed at the same place by only operating the outside fluid supply means. So, the operation finishes in a short time and automation with a robot is easy.

According to claim 3, the outside fluid supply means and the supply means of the working fluid for working and releasing working the fixing means are provided at only one of the workpiece holding members installed on the main body. Therefore, the structure of the chuck unit can be made simple.

According to the invention of claim 4, the workpiece holding member and the sliding member are unitedly formed with each other. So, the chuck unit can be made smaller.

### BRIEF DESCRIPTION OF THE DRAWINGS

Fig.1 is a view for showing an example of a machine tool having a chuck unit for lathe applying the present invention;
Fig.2 is a view for showing a routine of machining on a workpiece using the chuck unit for lathe of Fig.1;
Fig. 3 is a view for showing a routine of machining on a workpiece using the chuck unit for lathe of Fig.1;
Fig.4 is a view for showing a routine of machining on a workpiece using the chuck unit for lathe of Fig.1;
Fig.5 is a view for showing a routine of machining on a workpiece using the chuck unit for lathe of Fig.1;
Fig.6 is a view for showing a routine of machining on a workpiece using the chuck unit for lathe of Fig.1;
Fig.7 is a view for showing a routine of machining on a workpiece using the chuck unit for lathe of Fig.1;
Fig.8 is a view for showing a routine of machining on a workpiece using the chuck unit for lathe of Fig.1;
Fig.9 is a view for showing a routine of machining on a workpiece using the chuck unit for lathe of Fig.1;
Fig.10 is a view for showing a routine of machining on a workpiece using the chuck unit for lathe of Fig.1;
Fig.11 is a view for showing a routine of machining on a workpiece using the chuck unit for lathe of Fig.1;
Fig.12 is a strabismus view for showing a second embodiment of the chuck unit for lathe applying the present invention;
Fig.13 is a front elevation of the chuck unit for lathe as shown in Fig.12;
Fig.14 is an explanation view for showing motions of the chuck unit for lathe of Fig.12;
Fig. 15 is an explanation view for showing motions of the chuck unit for lathe of Fig.12;
Fig.16 is an explanation view for showing motions of the chuck unit for lathe of Fig.12;
Fig. 17 is an explanation view for showing motions of the chuck unit for lathe of Fig.12;
Fig.18 is a strabismus view for showing a third embodiment of the chuck unit for lathe applying the present invention;
Fig.19 is a front elevation of the chuck unit for lathe as shown in Fig.18; and
Fig.20 is a semi-sectional view for showing a forth embodiment of the chuck unit for lathe applying the present invention.

### DESCRIPTION OF THE PREFERRED EMBODIMENTS

Embodiments of the present invention will now be explained hereinafter, referring to the drawings.

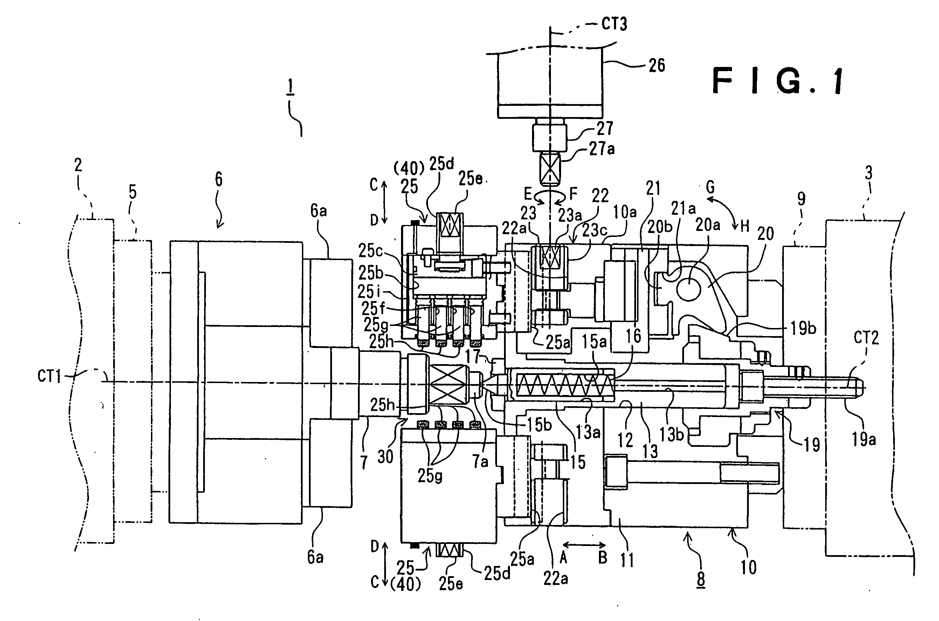

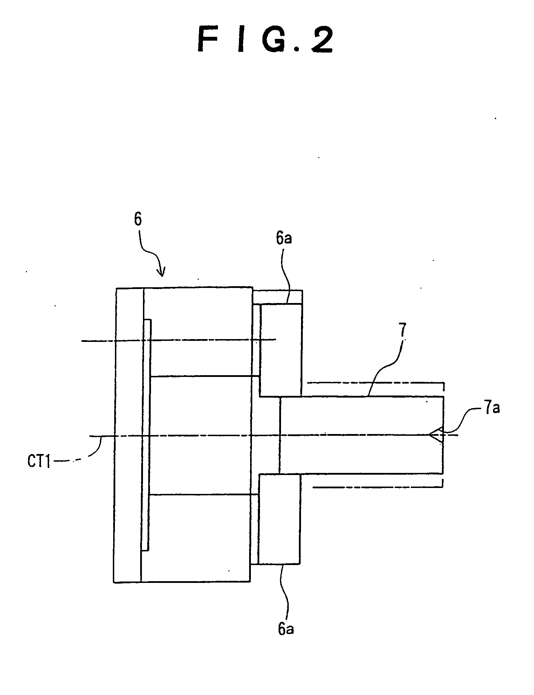

Fig.1 is a view for showing an example of a machine tool having a chuck unit for lathe applying the present invention. Fig.2 through Fig.11 are views for showing a routine of machining on a workpiece using the chuck unit for lathe of Fig.1.

A lathe 1 which is a machine tool has spindle stocks 2, 3 provided facing each other, as shown in Fig.1. The spindle stocks 2, 3 are provided being free to move and drive in a direction as shown by arrows A and B which is Z axis direction. At the spindle stock 2, a spindle 5 is provided, being free to rotate and drive with an axial center CT1 parallel to the Z axis as its center and being free to position at an optional rotational angle (that is, at C axis angle) with the axial center CT1 as its center. On a top end of the spindle 5, a chuck 6 is installed. Two or more jaws 6a are provided at the chuck 6, being free to move and drive in a direction as shown by arrows C and D which is a radial direction with the axial center CT1 as its center.

And, a spindle 9 is provided at the spindle stock 3, being free to rotate and drive with an axial center CT2 (corresponds with the axial center CT1) parallel to the Z axis as its center, and being free to position at an optional rotational angle (that is, at the C axis angle) with the axial center CT2 as its center. On a top end of the spindle 9, a chuck 10 comprising a chuck unit 8 is installed.

The chuck 10 has a main body 11 in the shape of a cylinder. At a center portion of the main body 11, a through hole 12 is formed so as to penetrate, corresponding its center with the axial center CT2. A sleeve 13 is inserted into the through hole 12. On the left hand of the sleeve 13 in the figure, a hole 13a is formed. An oil pressure supply hole 13b, provided corresponding its center with the axial center CT2, is connected with the hole 13a. A center 15 is inserted in and engaged with the hole 13a, being free to slide in the direction as shown by the arrows A and B, corresponding its axial center with the axial center CT2.

The center 15 has a hole 15a. A coil spring 16 is provided between the wall face of the left end of the hole 15a in the figure and the wall face of the right end of the hole 13a of the figure so as to contract, and the coil spring 16 always energizes the center 15 in the direction as shown by the arrow A. On the left end of the center 15 of the figure, a projecting portion 15b in the shape of a circular cone is formed, and a stop ring 17 is installed on the left end face of the sleeve 13 of the figure.

A base 19 is installed on a base end portion of the right hand of the sleeve 13 of the figure, and a bar 19a is provided at the base 19, corresponding its axial center with the axial center CT2. Three engagement faces 19b are formed on an outer peripheral portion of the base 19 at the pitch of 120° with the axial center CT2 as its center, corresponding to first jaws described hereinafter. A cam 20 supported by an axis 20a in a direction as shown by arrows G and H being free to oscillate is engaged with each engagement face 19b. Three cams 20 are formed at the pitch of 120° with the axial center CT2 as its center, and an engagement portion 20b is formed at each cam 20.

First jaws 21 are supported by the main body 11, being free to move in the direction as shown ba a a y the arrows C and D, which is a radial direction with the axial center CT2 as its center. Three first jaws 21 are provided, respectively facing the above-mentioned cams 20. On the right hand of each first jaw 21 of the figure, a ditch 21a is formed, and the engagement portion 20b of the above-mentioned cam 20 engages with the ditch 21a. A second jaw 22 is installed on each first jaw 21, and an adjusting screw 23 engages with the second jaw 22, being free to rotate.

The adjusting screw 23 has an adjusting hole 23a which section is a quadrangle, formed on an outer peripheral face 10a side of the chuck 10, and a feed screw 23c is formed at the outer peripheral portion of the adjusting screw 23.

Furthermore, a third jaw 25 is provided at the second jaw 22, being free to move in the direction as shown by the arrows C and D, which is a radial direction with the axial center CT2 as its center. On the right side of the third jaw 25 of the figure, a screw 25a is formed, engaging with the feed screw 23c of the adjusting screw 23. The third jaw 25 has a cylinder 25b, and a piston 25c is inserted into and engaged with the cylinder 25b, being free to slide in the direction as shown by the arrows C and D.

An operation rod 25d, fitting in the third jaw 25, is engaged with the piston 25c, being free to relatively rotate. A top end of the operation rod 25d of the figure projects on the outer peripheral face 10a side of the chuck 10. Furthermore, at its top end portion, an adjusting hole 25e which section is a quadrangle is formed. On the lower hand of the cylinder 25b of the figure, two or more sub-cylinders 25f are formed, and a piston rod 25g engages with each sub-cylinder 25f, being free to independently slide along the direction as shown by the arrows C and D which is the axial center direction of the sub-cylinder 25f.

Besides, a tool rest 26 is provided on the upper hand of the spindle stocks 2, 3 of the figure, being free to move and drive in the direction as shown by the arrows A and B which is the Z axis direction and in the direction as shown by the arrows C and D which is Y axis direction orthogonal to the Z axis. On the tool rest 26, a chuck jaw operation jig 27 can be attachably and detachably installed in addition to general tools, such as a cutting tool, a drilling tool and a milling tool.

At the top end of the chuck jaw operation jig 27, an operation portion 27a which section is a quadrangle is formed, and the chuck jaw operation jig 27 can drive and rotate the operation portion 27a through a drive unit (not shown) at an optional angle in the direction as shown by arrows E and F with an axial center CT3 as its center by installing on the tool rest 26, similar to the rotational tool.

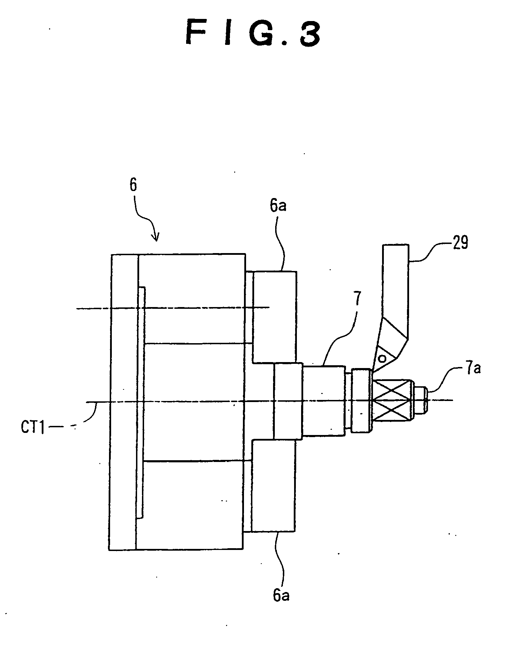

The lathe 1 has the structure as mentioned before. In order to machine on a raw material workpiece 7 which section is a circular shape using the lathe 1, the raw material workpiece 7 is installed on the chuck 6 of the spindle stock 2 side through the jaws 6a, and a center hole 7a is formed on an end face of the raw material workpiece 7 by a center hole drill (not shown) installed on the tool rest 26, as shown in Fig.2. Subsequently, a cutting tool, such as a cutting tool 29 or a rotating tool, such as a drilling tool and milling tool is installed on the tool rest 26 so as to execute first routine of machining on the raw material workpiece 7 , as shown in Fig.3. On this occasion, the raw material workpiece 7 can be easily held by the normal chuck 6 since its section is a circular shape. In the state that it is held, the first routine of machining can be smoothly executed on a right hand portion of the raw material workpiece 7.

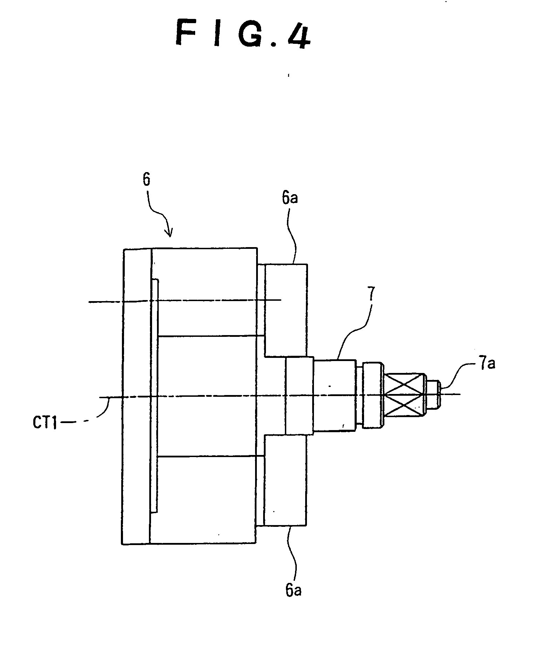

After the first routine of machining finishes on the right hand portion of the raw material workpiece 7 of the figure in this way as shown in Fig.4, the workpiece 7 after the first routine of machining is delivered to the chuck unit 8 of the spindle stock 3 side so as to machine on pre-machined portion of the left hand of the workpiece 7 which has been held by the chuck 6. In order to machine on the left hand portion of the workpiece 7, it is necessary to hold the right hand portion of the workpiece 7, which section is machined in various shapes from the circular shape of the raw material after finishing the first routine of machining, with the chuck 10.

In order to do so, the chuck 6 of the spindle stock 2 side holding the workpiece 7 on which the first routine of machining finishes is moved in the direction as shown by the arrow B and the top end of the workpiece 7 is inserted into a workpiece holding space 30 formed enclosing by two or more third jaws 25 being in open state of the chuck unit 8 of the spindle stock 3 side, as shown in Fig.1. At this time, the third jaws 25, the second jaws 22 and the first jaws 21 are in the open state that they are moved in the direction as shown by the arrow C in the figure to the utmost, and the piston rods 25g of the third jaw 25 are in the state that they are moved in the direction as shown by the arrow C in the figure to the utmost by the operation rod 25d through the piston 25c.

Then, a workpiece holding portion 25h of the top end of the piston rod 25g is in the most open state in the radial direction with respect to the axial center CT2, that is, in the state that it is moved in the direction as shown by the arrow C to the utmost. And, the top end of the workpiece on which the first routine of machining finishes is smoothly inserted into the workpiece holding space 30 without interfering with the piston rods 25g.

When the top end of the workpiece on which the first routine of machining finishes is inserted into the workpiece holding space 30 formed between the third jaws 25 in the chuck unit 8, the projecting portion 15b of the center 15 is inserted into and engaged with the center hole 7a of the top end of the workpiece 7. Furthermore, the center 15 is slightly moved in the direction as shown by the arrow B against the elasticity of the coil spring 16 by driving the spindle stock 2 in the direction as shown by the arrow B, and the workpiece 7 is correctly held between the chuck 6 and the center 15, corresponding its axial center and the axial center CT1 or CT2 of the spindle 5 or 9 with each other.

Subsequently, the chuck jaw operation jig 27 is installed on the tool rest 26, and in this state, the tool rest 26 is moved and driven in the direction as shown by the arrows A and B and in the direction as shown by the arrows C and D, and the operation portion 27a of the top end of the chuck jaw operation jig 27 is moved in the direction of the adjusting screw 23 of the second jaw 22 so as to insert into the adjusting hole 23a.

When the chuck jaw operation jig 27 is driven a predetermined rotational angle in the direction as shown by the arrow F in this state, the adjusting screw 23 is also rotated in the direction as shown by the arrow F so as to gradually move the third jaw 25 in the direction as shown by the arrow D, that is, in the axial center CT2 direction through the feed screw 23c and the screw 25a. In this way, the third jaw 25 is gradually moved in the direction of the workpiece 7 just before the workpiece holding portion 25h of the top end of the piston rod 25g of the third jaw 25 contacts with the outer peripheral portion of the workpiece 7.

At this time, driving and rotating of the adjusting screw 23 by the chuck jaw operation jig 27 is stopped, and the chuck jaw operation jig 27 is retreated in the direction as shown by the arrow C. Besides, the chuck unit 8 is driven and rotated a predetermined rotational angle with the axial center CT2 as its center so as to face the adjusting screw 23 adjacent to the adjusting screw 23 which has been driven a little while ago and the chuck jaw operation jig 27 each other. By similar operations, the operation portion 27a of the chuck jaw operation jig 27 is inserted into the adjusting hole 23a of the adjusting screw 23, and the workpiece holding portion 25h of the third jaw 25 connected with the adjusting screw 23 continues being moved just before contacting with the outer peripheral portion of the workpiece 7.

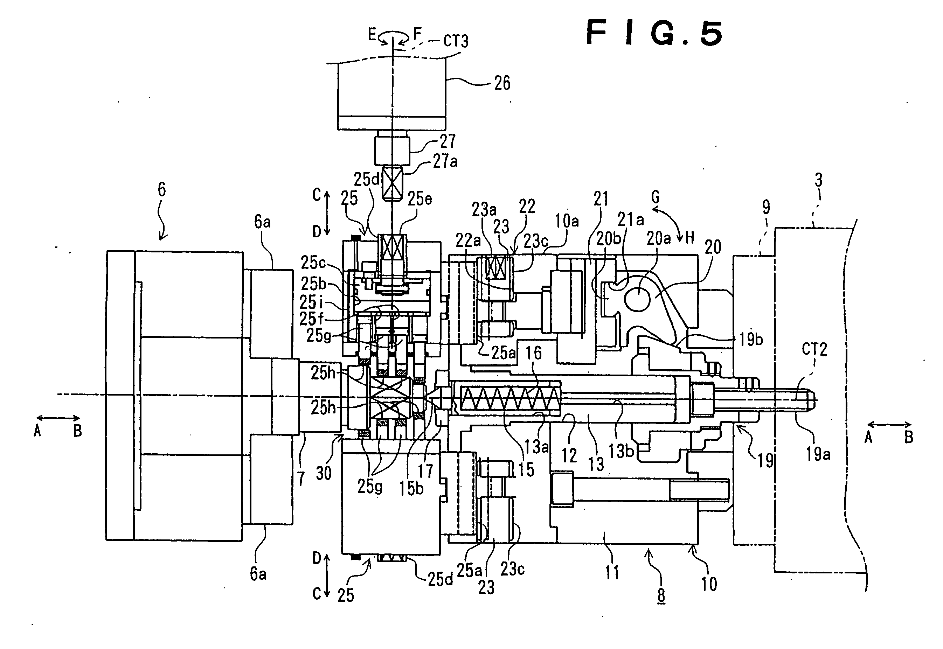

When the workpiece holding portion 25h of the corresponding third jaw 25 continues being moved just before contacting with the outer peripheral portion of the workpiece 7 by the chuck jaw operation jig 27 concerning the remaining adjusting screws 23 in the similar way, the operation portion 27a of the top end of the chuck jaw operation jig 27 is moved in the direction of the operation rod 25d of the third jaw 25 so as to insert in the adjusting hole 25e, as shown in Fig.5.

In this state, the chuck jaw operation jig 27 is driven a predetermined rotational angle in the direction as shown by the arrow F. Then, the operation rod 25d fitting in the third jaw 25 is also rotated in the direction as shown by the arrow F, and the operation rod 25d is gradually moved in the direction as shown by the arrow D, that is, in the direction of the axial center CT2 together with the piston 25c of the top end thereof. Then, the piston rod 25g in the sub-cylinder 25f is moved in the direction of the axial center CT2 by the operation of pressure oil filled in the cylinder 25b.

On this occasion, the workpiece holding portion 25h of the top end of each piston rod 25g abuts on the machined outer peripheral portion of the workpiece 7 on which the first routine of machining finishes, and further movement in the direction of the axial center CT2, that is, in the direction as shown by the arrow D is prevented at this time. But, the piston rod 25g which has not yet abutted on the workpiece 7 of the two or more piston rods 25g is moved in the axial center CT2 direction, independently of the piston rods 25g, being already in the abutting state, and stops moving when the workpiece holding portion 25h of the top end thereof abut on the machined outer peripheral portion of the workpiece 7.

Contact pressure, between the workpiece holding portion 25h of the piston rod 25g already being in the abutting state and the outer peripheral portion of the workpiece 7 is not increased so long as such a state that at least one piston rod 25g does not abut on the outer peripheral portion of the workpiece 7 is maintained although one or some piston rods 25g abut on the outer peripheral portion of the workpiece 7. The energy of pressure oil in the cylinder 25b is consumed for driving of the piston rods 25g which have not yet abutted on the workpiece 7, and inadvertently strong pressure does not act on the workpiece 7 from the piston rods 25g which have already contacted with the workpiece 7. Then, the workpiece 7 is held, corresponding its axial center and the axial center CT1 or CT2 of the spindle 5 or 9 with each other.

By doing so, as the result, all piston rods 25g of one third jaw 25 abut on and contact with the outer peripheral portion of the workpiece 7 along the machining shape of the workpiece 7. On this occasion, the workpiece 7 is not bent even if the piston rods 25g abut on the machined contour portion of the workpiece 7 since the workpiece 7 is correctly held by the center 15 and the chuck 6, corresponding its axial center and the axial center CT1 or CT2 of the spindle 5 or 9 with each other, as already mentioned.

When all piston rods 25g of the third jaw 25 lightly abut on the workpiece 7, the driving and the rotating of the operation rod 25d by the chuck jaw operation jig 27 is stopped, and the chuck jaw operation jig 27 is retreated in the direction as shown by the arrow C. And, the chuck unit 8 is driven and rotated a predetermined rotational angle with the axial center CT2 as its center so as to face the operation rod 25d of the third jaw 25, adjacent to the third jaw 25 of which piston rod 25g abuts on the workpiece 7 a little while ago, and the chuck jaw operation jig 27 each other.

In this state, the operation portion 27a of the chuck jaw operation jig 27 is engaged with the operation rod 25d in a similar way to the above-mentioned case, and all piston rods 25g of the third jaw 25 are lightly abutted on the workpiece 7 by the chuck jaw operation jig 27. Furthermore, similar operation is executed on the piston rods 25g of the remaining third jaws 25. In this way, as the result, all piston rods 25g are slightly abutted on and contacted with the outer peripheral portion of the workpiece 7, enclosing the portion of the workpiece 7 on which the first routine of machining finishes by the workpiece holding portions 25h of many piston rods 25g from the radial direction with respect to its axial center, as shown in Fig.5.

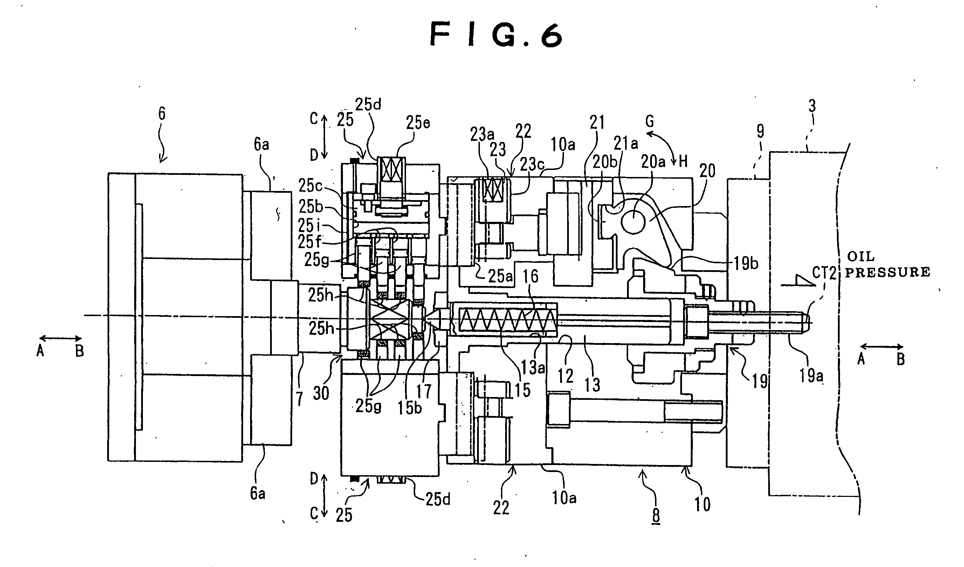

Subsequently, the chuck jaw operation jig 27 is retreated in the direction as shown by the arrow C, and the bar 19a of the base 19 is pulled in the direction as shown by the arrow B through a hydraulic actuator (not shown), as shown in Fig.6. Then, the cam 20 engaging with the engagement face 19b of the base 19 oscillates in the direction as shown by the arrow G through the axis 20a. Together with this, three first jaws 21 are synchronously moved in the direction as shown by the arrow D, that is, in the axial center CT2 direction through the engagement portion 20b and the ditch 21a. Then, the second jaw 22 and the third jaw 25 installed on the first jaw 21 are also moved in the direction as shown by the arrow D similarly, and the piston rods 25g of the three third jaws 25 are synchronously pressed in the axial center CT2 direction.

The capacity of the cylinder 25b of the third jaw 25 at which the piston rods 25g are provided is fixed since the piston 25c is fixed by the operation rod 25d fitting in the third jaw 25, and the pressure oil in the cylinder 25b has incompressibility. Taking the above-mentioned facts into consideration, each piston rod 25g, which has contacted with the workpiece 7 with light contact pressure, is contacted with and engaged with the outer peripheral portion of the workpiece 7 with the pressure corresponding to the movement stroke of the third jaw 25 in the direction as shown by the arrow D by moving the third jaw 25 in the axial center CT2 direction. Then, the workpiece 7 is strongly held by the three third jaws 25 through many piston rods 25g provided at these third jaws 25.

On this occasion, the piston rods 25g of each third jaw 25 communicate with each other in a single cylinder 25b. Then, the contact pressure of each piston rod 25g with respect to the workpiece 7 is constantly maintained, independently of the movement stroke quantity when each piston rod 25g is firstly contacted with the outer peripheral portion of the workpiece 7. Besides, before the movement of the first jaw 21 in the direction as shown by the arrow D, the contact state between each piston rod 25g and the outer peripheral portion of the workpiece 7 is such one that the piston rod 25g is slightly contacted with and engaged with the outer peripheral face of the workpiece 7. Then, the difference of the contact pressure of the piston rods 25g of each third jaw 25 is almost neglected in such a state.

From this fact, the contact pressure between the piston rods 25g with respect to the workpiece 7 is almost equal when the workpiece 7 is held by the third jaws 25 together with retreating of the first jaws 21, and the workpiece 7 is held by the three third jaws 25 with equal holding pressure.

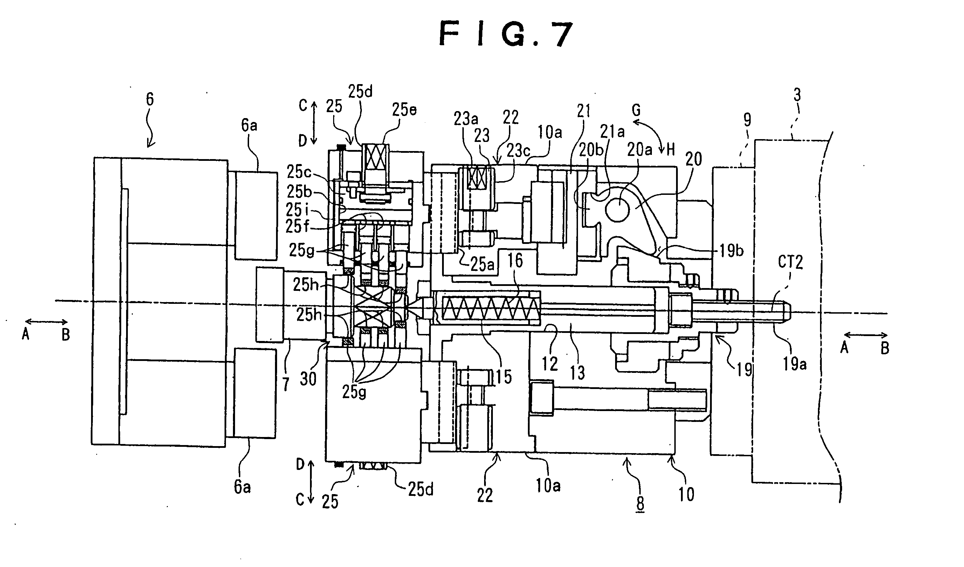

Subsequently, the jaws 6a of the chuck 6 of the spindle stock 2 side are released in the direction as shown by the arrow C, the workpiece 7 on which the first routine of machining finishes is certainly held by the chuck unit 8, corresponding its axial center and the axial center CT2 of the spindle 9 with each other by the third jaws 25, as shown in Fig.7.

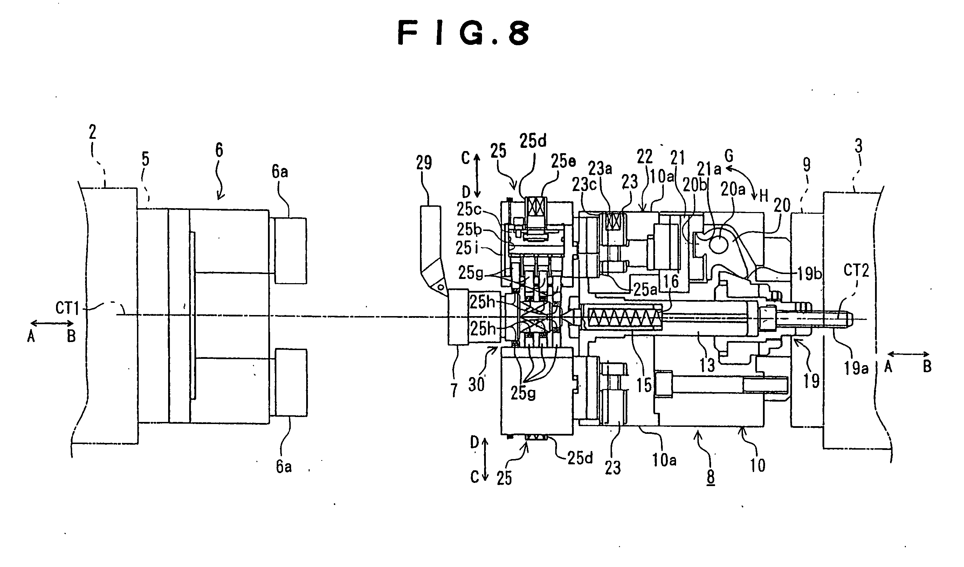

In this state, the spindle stocks 2, 3 are relatively moved in the direction of going away from each other, as shown in Fig. 8. The cutting tool 29 or a tool, such as a milling tool, a fraise tool, and a drilling tool is installed on the tool rest 26 in place of the chuck jaw operation jig 27. And, a second routine of machining is executed on the pre-machined portion of the left half in the figure of the workpiece 7 in such a manner that the spindle 9 is driven and rotated at a predetermined rotational number or is positioned at a predetermined rotational angle position so as to hold according to the machining program of the workpiece 7. The second routine of machining is smoothly executed since the workpiece 7 is certainly held by the third jaws 25 through the portion on which the first routine of machining finishes, as already mentioned.

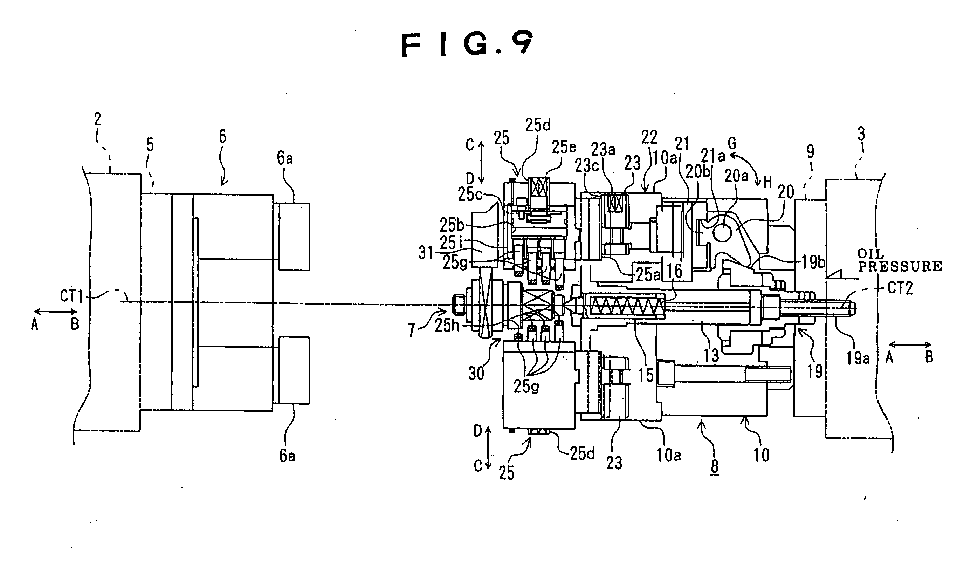

After finishing the second routine of machining on the workpiece 7, the workpiece 7 after the second routine of machining, which is held by the chuck unit 8, is held by a handling robot 31, as shown in Fig.9. In this state, the bar 19a of the base 19 is pressed in the direction as shown by the arrow A through a hydraulic actuator (not shown).

Then, the cam 20 engaging with the engagement face 19b of the base 19 oscillates in the direction as shown by the arrow H through the axis 20a. At the same time, the three first jaws 21 synchronously move in the direction as shown by the arrow C, that is, in the radial direction with the axial center CT2 as its center, in the direction being away from the axial center CT2 through the engagement portion 20b and the ditch 21a. Then, the second jaws 22 and the third jaw 25 installed on the first jaw 21 also move in the direction as shown by the arrow C in a similar way, and the workpiece holding portions 25h which have been contacted with and engaged with the workpiece 7 with a predetermined holding pressure also move in the direction as shown by the arrow C.

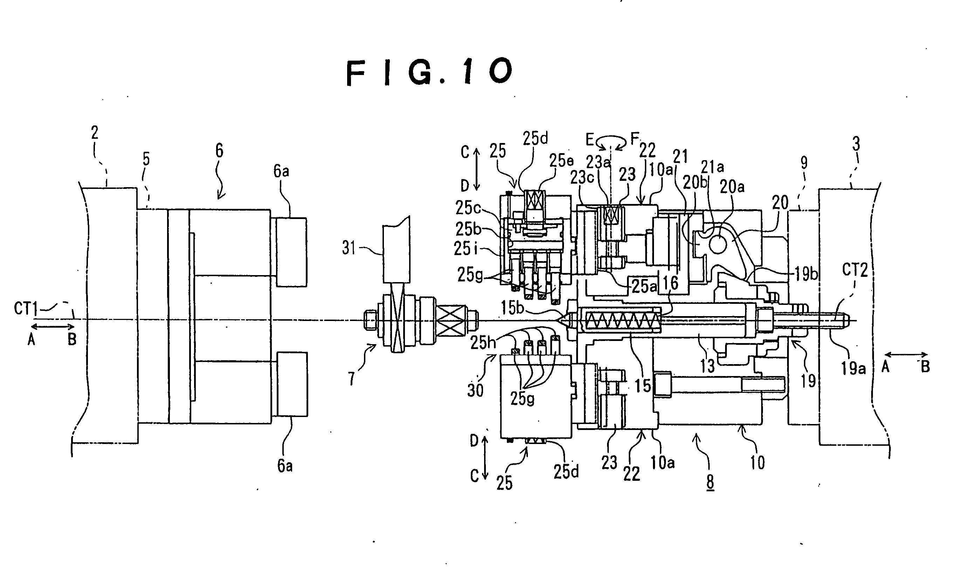

By doing so, the contact and engagement relation between the piston rod 25g and the outer peripheral portion of the workpiece 7 is also released, and the workpiece 7 is held by the handling robot 31. Then, the machined workpiece 7 is taken out from the workpiece holding space 30 of the chuck unit 8 by relatively moving the handling robot 31 in the direction as shown by the arrow A with respect to the spindle stock 3, as shown in Fig.10.

When the workpiece 7 is not pulled out in the direction as shown by the arrow A by the interference between the piston rods 25g and the outer peripheral portion of the workpiece 7 with only unclamping operation of the first jaw 21 by the base 19 owing to the shape of the workpiece 7, the chuck jaw operation jig 27 is installed on the tool rest 26, and the adjusting screws 23 of the three second jaws 22 are respectively rotated in the direction as shown by the arrow E so as to move the third jaws 25 in the direction as shown by the arrow C, and the workpiece holding portions 25h of the piston rods 25g are retreated to the positions where they do not interfere with the outer peripheral portion of the workpiece 7 so as to pull the workpiece 7 out in the direction as shown by the arrow A. The machined workpiece 7 pulled is carried to a proper parts catcher or the like being outside the machine.

When the machined workpiece 7 is taken out from the chuck unit 8 in this way and the third jaws 25 are not open in the direction as shown by the arrow C, the adjusting screws 23 of the second jaws 22 are rotated by the chuck jaw operation jig 27 as mentioned before so as to drive and open the third jaws 25 in the direction as shown by the arrow C. Subsequently, the operation rod 25d of the third jaw 25 is driven and rotated in the direction as shown by the arrow E so as to move the piston 25c in the direction as shown by the arrow C, that is, in the direction being away from the axial center CT2.

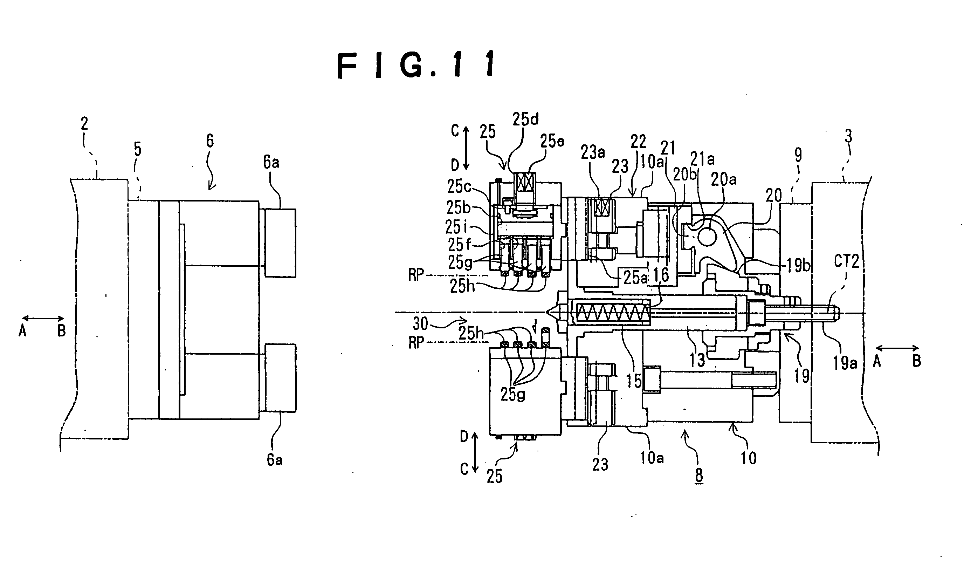

Then, each piston rod 25g in the sub-cylinder 25f is moved in the direction as shown by the arrow C, that is, in the direction away from the axial center CT2 so as to store at a retreated position RP, as shown in Fig.11. By doing so, the workpiece holding portion 25h is also retreated in the direction as shown by the arrow C so as to widely open the workpiece holding space 30 at the periphery of the axial center CT2.

When the piston rods 25g are not sufficiently moved to the retreated position in the direction as shown by the arrow C only with the movement of the piston 25c in the direction as shown by the arrow C, the piston rods 25g can be compulsorily moved in the direction as shown by the arrow C by supplying the lower portion of each sub-cylinder 25f (on the axial center CT2 side) with compressed air from a proper working fluid supply means side, such as the tool rest 26, through an air supply path 25i having its opening near the adjusting hole 25e of the operation rod 25d at the outer peripheral portion of each third jaw 25.

Furthermore, in an another method, each piston rod 25g may be stored in the sub-cylinder 25f in such a manner that the spindle 9 is rotated at an intermediate speed, and with its centrifugal force, each piston rod 25g is compulsorily moved in the direction as shown by the arrow C.

Besides, the second jaw 22 and the adjusting screw 23 are not necessary when the stroke of the third jaw 25 in the axial center CT2 direction can be sufficiently secured. And, in another structure, the third jaw 25 may be synchronously moved in the direction as shown by the arrows C and D directly by the first jaw 21.

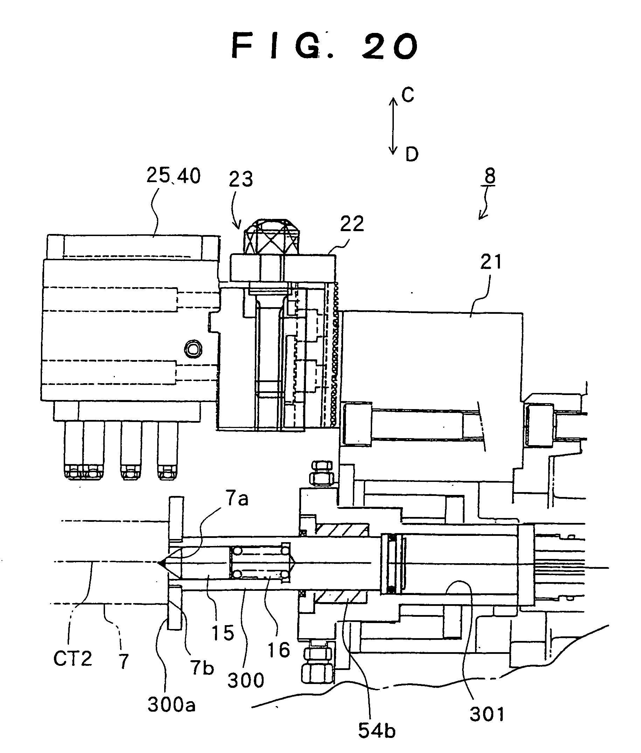

Furthermore, another structure of the first jaw 21, the second jaw 22 and the third jaw 25 is possible. That is, the first jaw 21 and the second jaw 22 may be united with each other so as to become to be sliding member, and the adjusting screw 23 may be provided on the first jaw 21 so as to directly drive and move the third jaw 25 in the direction as shown by the arrows C and D by the adjusting screw 23. Furthermore, the second jaw 22 and the third jaw 25 may be unitedly provided with each other as the workpiece holding member, as shown in Fig.20, and the adjusting screw 23 may be provided at the workpiece holding member so as to directly move and drive the workpiece holding member in the direction as shown by the arrows C and D with respect to the first jaw 21 by the adjusting screw 23.

And, the number of the workpiece holding members, such as the third jaws 25 and the number of the sliding members, such as the first jaws 21, for driving, opening and closing the workpiece holding member, to be installed on the main body 11 of the chuck unit 8, is not always three, but two, or four and more.

Besides, the number of the workpiece holding rods 25g installed on each workpiece holding member, such as the piston rods 25g, are not always four in a line concerning each third jaw 25, that is different from one of the embodiment. But, the workpiece holding rods 25g may have a plurality of lines and a plural number of each line. Besides, the workpiece holding rods 25g may have a plurality of lines, being located in a right angle direction with respect to a paper face of Fig.1 concerning each third jaw 25.

Furthermore, the energizing means for energizing the workpiece holding rod 25g to the retreated position RP retreated in the direction as shown by the arrow C with respect to the axial center CT2 is not always the air supply path 25i. But, such a structure that a coil spring may be provided being contracted, always energizing the workpiece holding rod 25g in the direction as shown by the arrow C so as to move in the direction as shown by the arrow C, making use of the elasticity of the coil spring at an opening state, is possible.

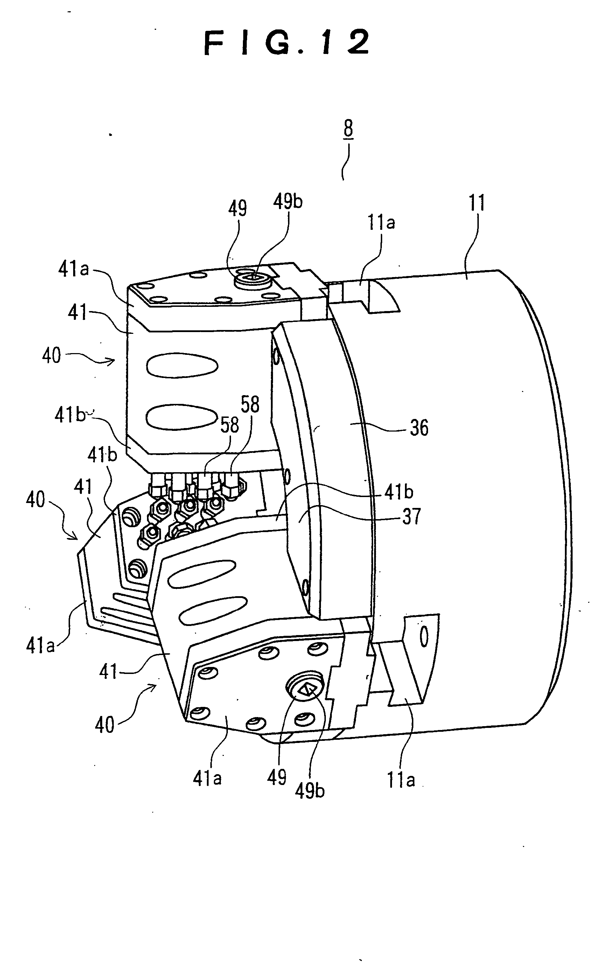

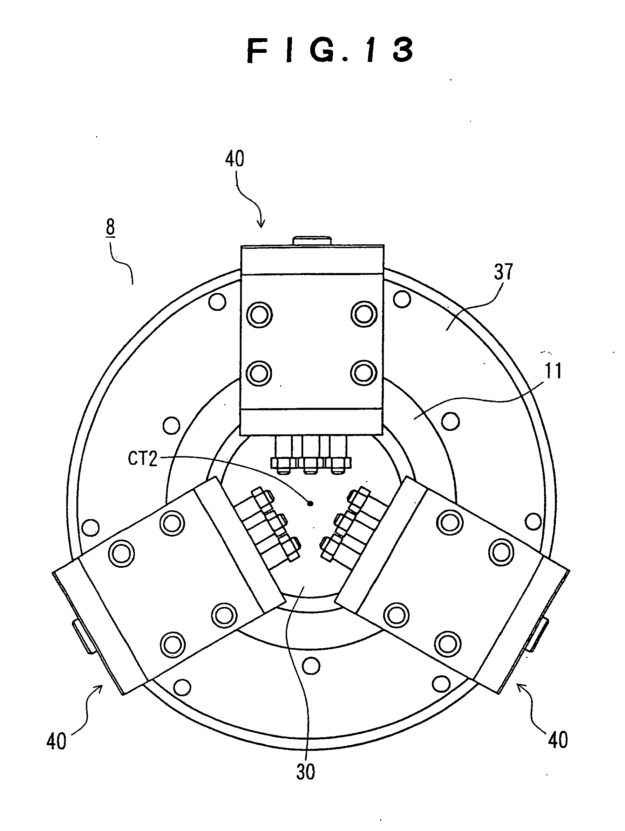

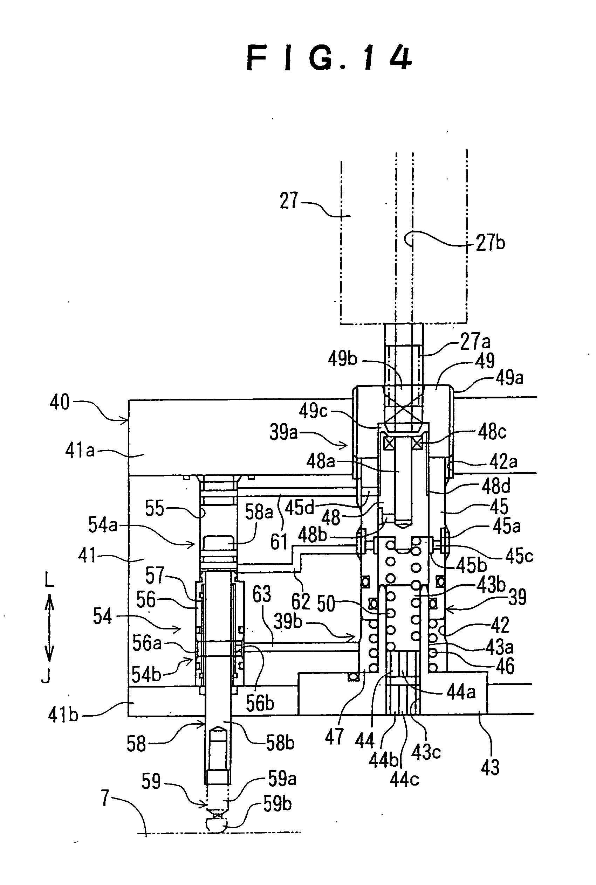

Figs. 12 through 17 show the second embodiment of the chuck for machine tool according to the present invention. Fig.12 is a strabismus view for showing a second embodiment of the chuck unit for lathe applying the present invention. Fig.13 is a front elevation of the chuck unit for lathe as shown in Fig.12. Figs.14 through 17 are explanation views for showing motions of the chuck unit for lathe of Fig.12.

The chuck unit 8 in this embodiment has the structure that a fourth jaw corresponding to the third jaw 25 is attached to the first jaw 21 in the above-mentioned embodiment. Similar to the above-mentioned embodiment, this chuck unit 8 is attached to the spindle 9. Therefore, the explanation inside the chuck unit is omitted, and the fourth jaw will now be explained hereinafter. On this occasion, the same mark is affixed to the similar in Figs.1 through 11.

On this occasion, the fourth jaw (the workpiece holding member) and the first jaw (the sliding member) may be unitedly formed in appearance in another embodiment. That is, the structure may be that the workpiece holding member which is the second jaw or the fourth jaw also serves as the first jaw which is the sliding member.

As shown in Figs. 12 and 13, the chuck unit 8 has the cylindrical main body 11. On the front face of this main body 11, three T ditches 11a are formed at 120° pitch in a radial direction with the axial center CT2 as its center. In each T ditch 11a, three sliders (not shown) corresponding to the first jaw 21 of the above-mentioned embodiment are respectively slidably supported along the T ditch 11a.

A fourth jaw 40 is fixed by the slider, and is provided free to move in the radial direction along the T ditch 11a. On the front face of the main body 11, three pits 36 are fixed, and each pit 36 is positioned between the respective fourth jaws 40, and an U shaped ditch is formed at each pit 36. And, a cover 37 for covering an opening portion of the ditch is fixed being free to attach and detach.

In the ditch of each pit 36, two arranged pipes for air pressure (not shown) and an arranged pipe for oil pressure (not shown), which are respectively formed by flexible tubes are arranged, thereby the adjacent fourth jaws 40 are connected with each other. That is, the three fourth jaws 40 are respectively connected with each other by the two arranged pipes for air pressure and an arranged pipe for oil pressure. When any one of the fourth jaws 40 is operated, other two fourth jaws 40 also operate. On this occasion, a flexible pipe made of metal or a hose made of synthetic resin may be used as an arranged pipe for air pressure and an arranged pipe for oil pressure.

As shown in Fig.14, the forth jaw 40 is comprised of an operation portion 39 and a workpiece holding portion 54. In Fig.14, a single operation portion 39 and a single workpiece holding portion 54 are only shown for the convenience of preparation of the drawing. In fact, all of the workpiece holding portions 54 located at the chuck unit 8 are operated by the single operation portion 39 through the arranged pipes for air pressure and oil pressure.

The fourth jaw 40 has a main body 41 and a pair of face plates 41a, 41b fixed by both ends of the main body 41. A through hole 42 is formed at the main body 41 and the face plates 41a, 41b, and the end portion of the face plate 41a side is a screw hole 42a. The operation portion 39 is located in this through hole 42.

A seat 43 is fixed on the face plate 41b side of the through hole 42, and has a projection 43a to be inserted into the through hole 42. A through hole 43b is formed at this projection 43a, passing through in its axial direction. The end portion of the face plate 41b side of this through hole 43b is a screw hole 43c. An adjusting screw 44 is fitted in this screw hole 43c.

A through hole 44a is formed at the axial center of this adjusting screw 44. And, a screw 44b for back up is located at the adjusting screw 44, and at this screw 44 also, a through hole 44c is formed at its axial center, communicating with the through hole 44a. And, the through hole 44a and the through hole 44c form an air exit.

Concerning a piston 45 in a cylindrical shape, its outer peripheral face is fitted in the through hole 42, being free to slide, and its inner peripheral face is fitted on the projection 43b, being free to slide. This piston 45 is supported by a coil spring 46 installed on the outer periphery of the projection 43a. At the center portion of this piston 45, ditches 45a, 45b in a ring shape are formed on its outer peripheral face and its inner peripheral face, and a plurality of through holes 45c are formed for connecting these ditches 45a and 45b. Besides, a through hole 45d is formed on the face plate 41a side of the piston 45 as a passage of compressed air.

An oil chamber 47 is comprised by a space enclosed by the inner peripheral face of the through hole 42, the outer peripheral face of the projection 43b, the end face of the main body 41 side of the seat 43 and the end face of the face plate 41b side of the piston 45, and is filled with oil. That is, the piston 45 comprises an oil pressure generating means 39b for generating oil pressure by changing the capacity of the oil chamber 47 by its movement.

A spool 48 is fitted in the piston 45, being free to slide, and is supported by a coil spring 50 installed in the through hole 43b of the projection 43a. The position of this coil spring 50 is adjustable in the direction of the axis of the piston 45 by the adjusting screw 44, and the coil spring 50 always energizes the spool 48 in the direction as shown by the arrow L.

A hole 48a is formed at the axial center of this spool 48 as a passage of compressed air. And, a through hole 48b is formed for communicating one end of this hole 48a and the ditch 45b of the piston 45 with each other. A ring 48c formed in a ring shape, with elastic body, such as rubber, is located on the end face of the face plate 41a side of the hole 48a of the spool 48. And, the outer peripheral portion of the end face of the face plate 41a side of the spool 48 is formed, having smaller diameter so as to form a passage 48d of compressed air, communicating with the through hole 45d between the outer peripheral portion and the piston 45. That is, the piston 45 and the spool 48 comprises a passage switching means 39a of compressed air.

A screw 49a is formed at the outer periphery of an operation rod 49, and is fitted on the screw 42a of the through hole 42. At the axial center of this operation rod 49, an operation hole 49b which section is a quadrangle and a hole 49c which section is circular are formed so as to communicate with each other, penetrating in its axial direction. And, the operation rod 49 is fitted outside the spool 48 so as to form the passage 48d between the hole 49c of the rod 49 and the outer peripheral face of the face plate 41a side of the spool 48. And, the end face of the main body 41 side of the operation rod 49 abuts on the end face of the face plate 41a side of the piston 45 by the resisting pressure of the coil spring 46.

A through hole 55 is formed, penetrating the main body 41 and the face plate 41b. The workpiece holding portion 54 is located in this through hole 55.

A sleeve 56 is installed on the face plate 41b side of the through hole 55. A ditch 56a in a ring shape is formed at the outer peripheral face of the sleeve 56, and a through hole 56b is formed, connecting this ditch 56a and the inner peripheral face of the sleeve 56 with each other. A clamper 57 is formed in a cylindrical shape with thin metal, capable of being elastically deformed in its diameter direction, and is located at the inside of the sleeve 56 so as to form a predetermined clearance between the clamper 57 and the inner peripheral face of the sleeve 56.

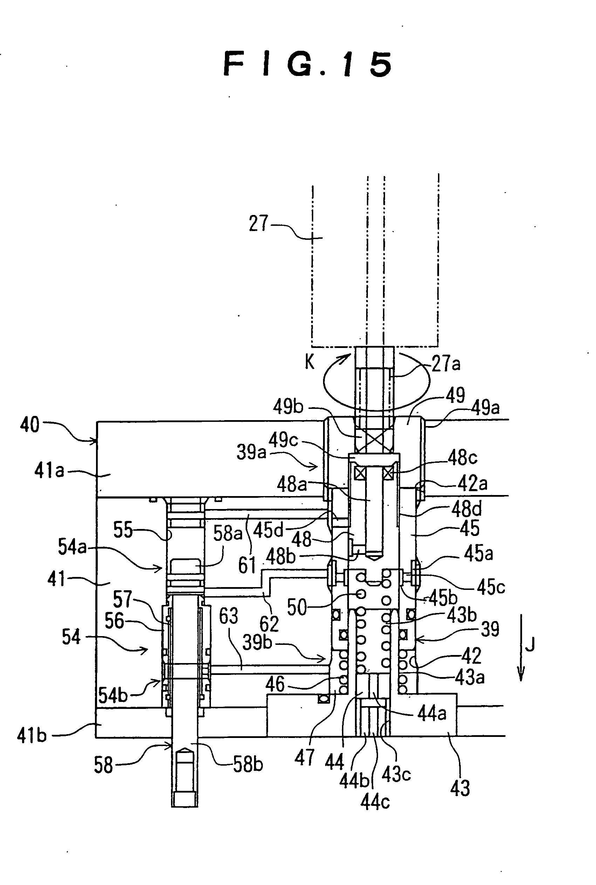

A piston rod 58 has a piston 58a slideably fitting in the through hole 55 and a rod 58b slideably fitting in the clamper 57, and the through hole 55 and the piston rod 58 comprises a driving means (air cylinder) 54a. At the end portion of the face plate 41b side of the piston rod 58, a rod 59a is provided so as to comprise a workpiece holding rod 59. At the top end of this rod 59a, a pad 59b (shown in Fig.14 only, omitted in Figs.15 through 17) supported through a universal joint (not shown) so as to oscillate, is provided. And, the workpiece 7 is held by contacting this pad 59b with the workpiece 7.

The end portion of the face plate 41a side of the through hole 55 is connected with the through hole 45d of the piston 45 through a communicating hole 61 formed at the main body 41. And, the central portion of the through hole 55 is connected with the ditch 45a of the piston 45 through a communicating hole 62 formed at the main body 41.

Besides, the ditch 56a of the sleeve 56 and the oil chamber 47 are connected with each other by a communicating hole 63 formed at the main body 41. The clamper 57 is elastically deformed in its diameter direction by the oil pressure supplied from the oil chamber 47, the rod 58b of the piston rod 58 is restricted and fixed. Then, the sleeve 56 and the oil chamber 47 et al. comprise a fixing means 54b for fixing the position of the rod 58b.

On this occasion, the chuck jaw operation jig 27 to be used in the present embodiment is comprised in such a manner that a supply hole for compressed air is formed at its axial center, and compressed air is supplied from the top end of its operation portion 27a.

The routine of holding the workpiece 7 in the chuck unit 8 will now be explained hereinafter, referring to the above-mentioned embodiment. The third jaw 25 in the above-mentioned embodiment is the forth jaw 40 in the present embodiment.

As shown in Fig.1 of the above-mentioned embodiment, the workpiece holding space 30 (see Fig.13) formed by the workpiece holding portion 59 is set in the widest open state in such a state that the fourth jaws 40 are moved in the radial direction with respect to the axial center CT2, in the direction of the outer periphery of the main body 11, that is, in the state that the workpiece holding portions 59 are most opened with respect to the axial center CT2. And, the top end of the workpiece 7 after finishing the first routine of machining is inserted into this workpiece holding space 30.

When the top end of the workpiece 7 after finishing the first routine of machining is inserted into the workpiece holding space 30, the center 15 is fitted in the center hole 7a of the workpiece 7, as shown in Fig.1 of the above-mentioned embodiment, and the workpiece is correctly supported by the chuck 6 of the spindle 5 side and the center 15, corresponding the axial center of the workpiece 7 and the axial center CT2 with each other.

In this state, the bar 19a of the base 19 is pulled in through a hydraulic actuator (not shown) in the direction as shown by the arrow B, as shown in Fig.6 of the above-mentioned embodiment. Then, the cum 20 engaging with the engagement face 19b of the base 19 oscillates in the direction as shown by the arrow G through the axis 20a, and together with this movement, three first jaws 21 are synchronously moved in the direction as shown by the arrow D, that is, in the axial center CT2 direction through the engagement portion 20b and the ditch 21a.

Then, the fourth jaw 40 connected with the first jaw 21 through the slider is also moved in the axial center CT2 direction in a similar way. That is, the fourth jaw 40 is moved in the direction approaching the workpiece 7. At this time, the pad 59b of the workpiece holding portion 59 has not yet been contacted with the workpiece 7.

Subsequently, the chuck jaw operation jig 27 is installed on the tool rest 26, as shown in Fig.5 of the above-mentioned embodiment. In this state, the tool rest is moved and driven so as to insert the operation portion 27a of the top end of the chuck jaw operation jig 27 in the operation hole 49b of the operation rod 49, as shown in Fig.14.

And, compressed air is supplied from the top end of the operation portion 27a of the chuck jaw operation jig 27 through a through hole 27b formed at the chuck jaw operation jig 27 for the spool 48. Then, the spool 48 is moved in the direction as shown by an arrow J by the compressed air against the elasticity of the coil spring 50, and the through hole 45d which has been closed by the spool 48 communicates with the passage 48d formed at a clearance of the outer peripheral face of the spool 48, as shown in Fig.14. Then, the compressed air supplied between the operation rod 49 and the spool 48 is supplied to an upper portion of the through hole 55 of the workpiece holding portion 54, passing through between the inner peripheral face of the hole 49c of the operation rod 49 and outer peripheral face of the spool 48, the passage 48d formed between the inner peripheral face of the piston 45 and the outer peripheral face of the spool 48, the through hole 45d of the piston 45 and the communicating hole 61.

At this time, the compressed air supplied from the chuck jaw operation jig 27 is also supplied another fourth jaws 40 adjacent through the arranged pipe for air pressure arranged in the pit 36 (see Figs.12, 13), and is also supplied to the workpiece holding portion 54 of each fourth jaw 40.

Therefore, the quantity of necessary compressed air to be supplied from the chuck jaw operation jig 27 is the quantity adding the quantity ejected to the atmosphere passing through the communicating passage 61, the clearance formed between the inner peripheral face of the through hole 42 and the outer peripheral face of the piston 45, and the clearance formed between the screw 42a and the screw 49a to the quantity necessary for working all of the workpiece holding portions 54 located at the chuck unit 8, or slightly more. On this occasion, the spool 48 of the another fourth jaw 40 is energized in the direction as shown by an arrow L of Fig.14 by the elasticity of the coil spring 50, and the outer peripheral face of the spool 48 closes the through hole 45d. So, the compressed air is not leaked even if the compressed air is supplied passing through the arranged pipe from the fourth jaw 40 connected with the operation jig 27, and is effectively used for moving the piston rod 58 in the direction as shown by the arrow J.

Then, the piston rod 58 projects in the direction as shown by the arrow J for the workpiece 7 from the fourth jaw 40 by the pressure of this compressed air, as shown in Fig.14, and the pad 59b abuts on the workpiece 7. On this occasion, each workpiece holding portion 59 once stops moving when the pad 59b of its top end abuts on the outer peripheral face of the workpiece 7. At this time, the contact pressure between the pad 59b and the workpiece 7 is not raised since the compressed air is consumed for moving the workpiece holding portion 59 which has not yet been contacted with the workpiece 7.

At this time, the air of the face plate 41b side of the piston 58 of the workpiece holding portion 54 flows inside the piston 45 through the communicating hole 62, the ditch 45a of the piston 45, the through hole 45c and the ditch 45b, and is furthermore released to the open air through the through hole 43b of the seat 43, the through hole 44a of the adjusting screw 44 and the hole 44c of the screw 44b.

When the pads 59b of all of the workpiece holding portions 59 abut on the outer peripheral face of the workpiece 7, the pressure of the compressed air supplied in the through hole 55 raises, and the pressure of contacting the pad 59b with the workpiece 7 raises. At this time, the pressure of the compressed air supplied in all the through holes 55 raises with almost equal pressure. Therefore, the workpiece 7 is certainly held by the workpiece holding portions 59, that is, by the fourth jaws 40, corresponding its axial center and the axial center CT2 with each other since it is pressed by almost equal pressure from the workpiece holding portions 59 contacting with its outer peripheral face. The contact pressure of the workpiece holding portion 59 with respect to the workpiece 7 is set by the pressure of the compressed air supplied.

In this state, the chuck jaw operation jig 27 rotates in the direction as shown by the arrow K so as to rotate the operation rod 49 in the direction as shown by the arrow K, as shown in Fig.15. Then, the operation rod 49, its screw 49a fits on the screw 42a formed on the face plate 41, moves in the direction as shown by the arrow J, rotating in the direction as shown by the arrow K. By this movement of this operation rod 49 in the direction as shown by the arrow J, the piston 48 is pressed, and the piston 48 is moved in the direction as shown by the arrow J, compressing the coil spring 46. Then, the oil filled in the oil chamber 47 is moved between the sleeve 56 and the clamper 57 passing through the communicating hole 63 since the capacity of the oil chamber 47 is compressed.

At this time, the oil run out from the oil chamber 47 is also supplied to adjacent another fourth jaw 40 through the arranged pipes for oil pressure arranged in the pit 36 (see Fig.12, 13), and is also supplied to the fixing portion 54b of each fourth jaw 40.

When the pressure of the oil raises, the clamper 57 is elastically deformed in its radius direction, the clamper 57 is contacted with the rod 58b of the piston rod 58 so as to clamp the rod 58b by this contacting pressure. That is, the piston rod 58 is restricted and fixed by the pressure of the oil run in between the sleeve 56 and the clamper 57. By this, a plurality of workpiece holding rods 59 located at the fourth jaw 40 are fixed, three-dimensionally tracing the outer peripheral face of the workpiece 7.

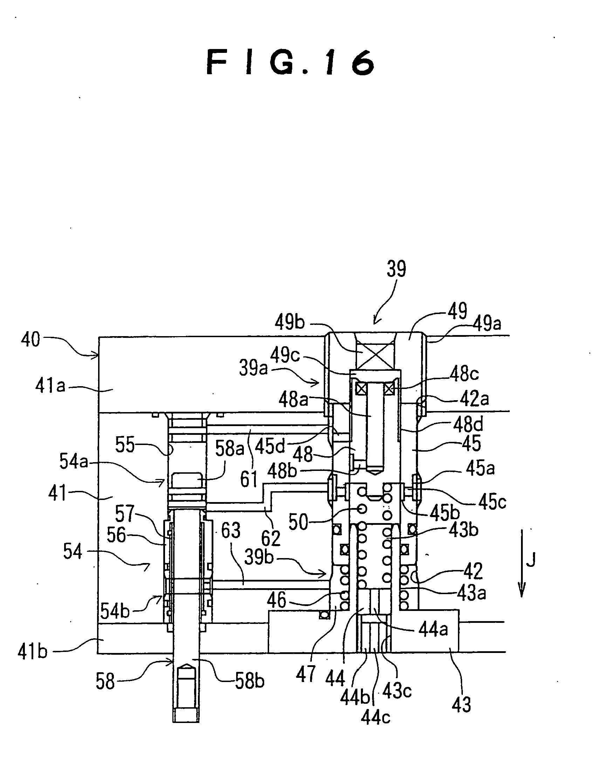

When the workpiece holding portions 59 are fixed, the chuck jaw operation jig 27 is retreated from the fourth jaw 40, and the workpiece 7 is in the state of being capable of being machined, as shown in Fig.16. At this time, the piston 45 is pressed by the resisting pressure of the coil spring 46 for the operation rod 49 side. But, the position of the piston 45 is maintained and the oil pressure is maintained by the frictional force of the screw 49 fitting in the screw hole 42a. That is, the clamping force of the piston rod 58 by the clamper 57 is maintained. As shown in Fig.8 of the above-mentioned embodiment, necessary machining is executed on the workpiece 7.

When the machining of the workpiece 7 held by the fourth jaws 40 finishes, it is held with the chuck unit 8 by the handling robot 31, as shown in Fig.9 of the above-mentioned embodiment, and the workpiece 7 finishing the second routine of machining is held. In this state, the bar 19a of the base 19 is pressed in the direction as shown by the arrow A through a hydraulic actuator (not shown). Then, the cam 20 engaging with the engagement face 19b of the base 19 oscillates in the direction as shown by the arrow H through the axis 20a. Together with this movement, the first jaw 21 is synchronously moved in the direction as shown by the arrow C, that is, in the radial direction with the axial center CT2 as its center, in the direction being away from the axial center CT2 through the engagement portion 20b and the ditch 21a.

Then, the fourth jaw 40, connected with the first jaw 21 through the slider, is also moved in the direction away from the axial center CT2, and the workpiece holding rod 59, which has held the workpiece 7 with a predetermined holding pressure, is also synchronously moved in the direction being away from the axial center CT2 so as to release the workpiece 7. Since the relative position of the workpiece holding rod 59 with respect to the fourth jaw 40 is restricted by the clamper 57 at this time, such state that the contour of the workpiece 7 is three-dimensionally traced is maintained. And, new shape of workpiece holding space 30 is formed by the workpiece holding rods 59 of each fourth jaw 40.

By doing so, the workpiece 7 is in the state of being held by the handling robot 31. As shown in Fig.10 of the above-mentioned embodiment, the machined workpiece 7 is taken out from the workpiece holding space 30 of the chuck unit 8 by relatively moving the handling robot 31 with respect to the spindle stock 3 in the direction as shown by the arrow A. The machined workpiece 7 taken out is carried to a proper parts catcher or the like outside the machine.

In order to repeatedly machine on the same kind of workpieces 7, the top end of the workpiece 7 after finishing the first routine of machining is inserted in the new workpiece holding space 30, the center 15 fits in the center hole 7a of the workpiece 7, and the workpiece 7 is correctly supported by the chuck 6 of the spindle 5 side and the center 15, corresponding the axial center of the workpiece 7 and the axial center CT2 with each other, in a similar way to the above-mentioned embodiment (see Fig.1).

In this state, the bar 19a of the base 19 is pulled in through a hydraulic actuator (not shown) in the direction as shown by the arrow B, as shown in Fig.6 of the above-mentioned embodiment. Then, the cam 20 engaging with the engagement face 19b of the base 19 oscillates in the direction as shown by the arrow G through the axis 20a. Together with this movement, three first jaws 21 are synchronously moved in the direction as shown by the arrow D, that is, in the axial center CT2 direction through the engagement portion 20b and the ditch 21a.

Since the workpiece holding rods 59 have been already maintained in the shape of three-dimensionally tracing the contour of the workpiece 7 at this time, all of the workpiece holding rods 59 simultaneously abut on the outer peripheral face of the workpiece 7, enclosing the workpiece 7, as it were, and contacts with the workpiece 7 with necessary pressure. Therefore, it is not necessary to make all of the workpiece holding rods 59 follow the outer peripheral face of the workpiece 7 whenever the workpiece 7 is delivered from the chuck 6 to the chuck unit 8. That is, it is only sufficient to move the fourth jaw 40 in the radial direction of the axial center CT2. So, the workpiece 7 can be delivered from the chuck 6 to the chuck unit 8 in a short time.

In the case of change of shape or size of the workpiece, it is necessary to retreat the workpiece holding rod 59 by retreating the piston 58a on the face plate 41a side with respect to the fourth jaw 40. The workpiece holding rod 59 is retreated as follows.

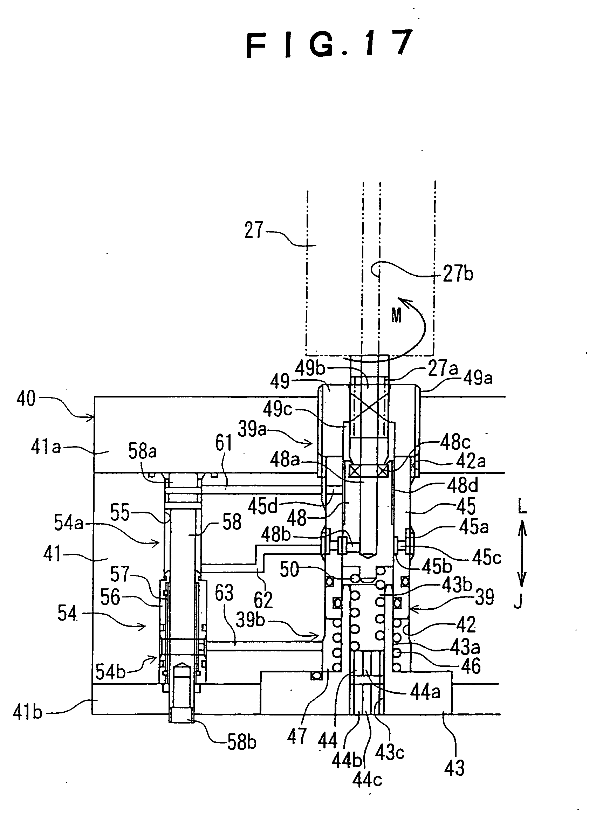

As shown in Fig.17, the operation portion 27a of the top end of the chuck jaw operation jig 27 is inserted in and engaged with the operation hole 49b of the operation rod 49. At this time, the top end of the operation portion 27a is stopped at the position where the through hole 48b of the spool 48 and the ditch 45a of the piston 45 communicate with each other, contacting with the ring 48c of the spool 48, and pressing the spool 48, and compressing the coil spring 50.

In this state, the chuck jaw operation jig 27 is rotated in the direction as shown by the arrow M so as to rotate the operation rod 49 in the direction as shown by the arrow M. Then, the operation rod 49 is rotated in the direction as shown by the arrow M, and is moved in the direction as shown by the arrow L. At this time, the piston 45 is also moved in the direction as shown by the arrow L together with the operation rod 49 by the resisting pressure of the coil spring 46.

Then, the capacity of the oil chamber 47 is made bigger, and the oil chamber 47 is negatively pressurized. For this reason, the oil run between the sleeve 56 and the clamper 57, by which the clamper 57 is elastically deformed, is absorbed by the negative pressure generating on the oil chamber 47, and is collected by the oil chamber 47 through the communicating hole 63. Then, the clamper 57 is restored by its elasticity so as to release the rod 58b of the piston rod 58.

In this state, the compressed air is supplied from the top end of the chuck jaw operation jig 27 through the through hole 27b. The compressed air supplied is supplied on the face plate 41b side of the piston 58a passing through the hole 48a of the spool 48, the through hole 48b, the ditch 45b of the piston 45, the through hole 45c, the ditch 45a and the communicating hole 62. By the pressure of this compressed air, the piston 58a is moved and retreated in the direction as shown by the arrow L (on the face plate 41a side), and the workpiece holding rod 59 is also retreated in the direction as shown by the arrow L.

At this time, a part of the air being between the piston 58a and the face plate 41a is ejected in the atmosphere, passing through the communicating passage 61, a clearance formed between the inner peripheral face of the through hole 42 and the outer peripheral face of the piston 45, and a clearance formed between the screw 42a and the screw 49a. Besides, another part of the air is ejected in the atmosphere, passing through the through hole 45d of the piston 45, the passage 48d, the hole 49c, and a clearance between the operation hole 49b of the operation rod 49 and the operation portion 27a of the chuck jaw operation jig 27.

In the present embodiment, the time for delivering the workpiece 7 from the chuck 6 to the chuck unit 8 is shortened so as to improve its working efficiency when machining is executed on the same kind of a plurality of workpieces 7, as metioned before.

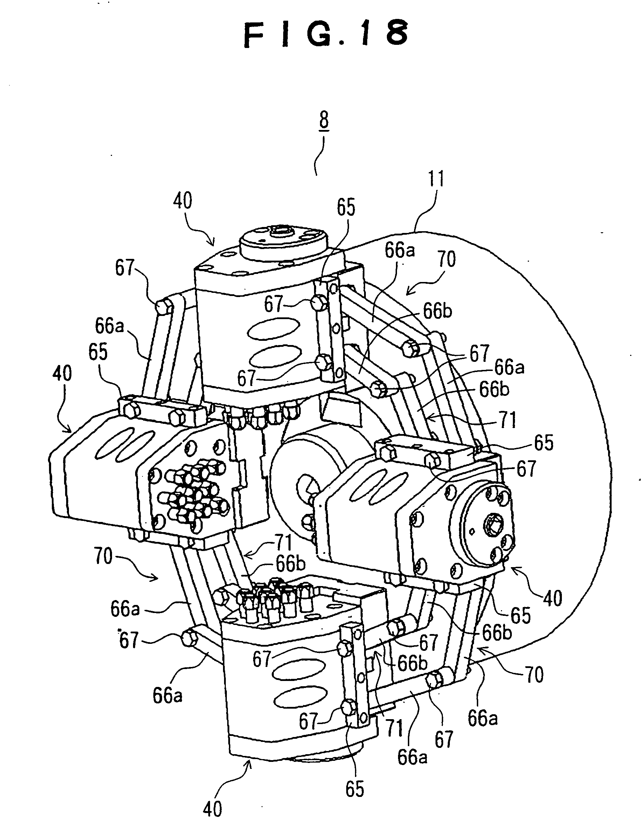

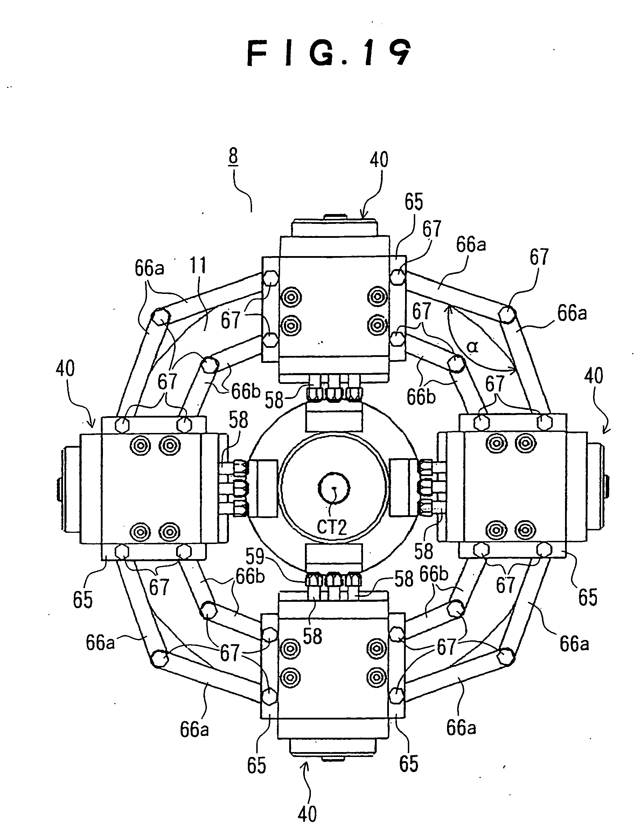

Figs.18 and 19 show a third embodiment of the chuck unit for machine tool according to the present invention. Fig.18 is a strabismus view for showing third embodiment of the chuck unit for lathe applying the present invention, and Fig.19 is a front elevation of the chuck unit for lathe as shown in Fig.18.

The difference between the chuck unit 8 in this embodiment and the chuck unit 8 in the second embodiment is that the chuck unit 8 in this embodiment has 4 (four) forth jaws 40 and flexible arrange pipes 70, 71 made of metal, connecting the respective jaws 40, are arranged. On this occasion, the inside structure of the chuck unit 8 and the inside structure of the fourth jaw 40 are the same as ones in the second embodiment. So, the explanation of the same as Figs.12, 13 is omitted, attaching the same numbers. Supporting means of the arranged pipe will now be explained hereinafter.

The flexible arranged pipes 70, 71 have a hollow holder 65 fixedly provided at both side faces of each fourth jaw 40. Hollow arms 66a, 66a and 66b, 66b which length is respectively different, are supported by each holder 65 through hollow pins 67, 67 being free to oscillate. The arms 66a, 66a and the arms 66b, 66b, which are respectively supported by the faces opposing to the forth jaws 40 adjacent to each other, are respectively connected with each other, being free to oscillate by the hollow pin 67 at the intermediate portion between the fourth jaws 40 adjacent to each other.

Two fluid supply passages (not shown) for compressed air are formed inside the holder 65, the arm 66a and the pin 67 of the flexible arranged pipe 70, thereby the fourth jaws 40 adjacent are connected with each other. Besides, a fluid supply passage for oil pressure is formed inside the holder 65, the arm 66b and the pin 67, thereby the fourth jaws 40 adjacent are connected with each other.

In order to protect these flexible arranged pipes 70, 71 from chip generating by machining on the workpiece, a cover (not shown), which is fixed by the main body 11, is provided, covering the movement area of the flexible arranged pipes.

The structure of the chuck unit 8 in this embodiment may be that a pair of two fourth jaws 40 which workpiece holding rods 59 (the piston rods 58) face each other, of the fourth jaws 40 is operated, being independent of the other pair of two fourth jaws 40, similar to a well-known chuck having four jaws when the four fourth jaws are driven and moved in the radial direction with the axial center CT2 as its center.

When the fourth jaws 40 are moved in the radial direction with respect to the axial center CT2, the connecting angles α (see Fig.19) between the arms 66a, 66a of the flexible arranged pipe 70 and between arms 66b, 66b of the flexible arrange pipe 71 are respectively changed so as to cope with the change of the space between the respective fourth jaws 40. Therefore, it is also sufficiently cope with the independent movement of two pairs of the fourth jaws 40 in the radial direction.

Even with such a structure, the same effects as the second embodiment can be obtained. Besides, it is possible to cope with the workpiece having various shapes of section by independently moving the two pairs of the fourth jaws 40 in the radial direction.

The arranged pipes for air pressure and for oil pressure are respectively formed by flexible arranged pipes, made of metal, so their strength is high. And, the chuck unit 8 can be made smaller in comparison with the arranged pipes made of synthetic resin, by making the flexible arranged pipes 70, 71 thinner. Besides, the workpiece holding unit can be certainly operated.

The structure of the chuck unit 8 in the embodiment as shown in Figs.1 through 11 may be that a communicating pipe for communicating the cylinders 25b of the three third jaws 25 with each other is porvided, and all of the piston rods 25g (workpiece holding rods) provided at the three third jaws 25 are operated by the operation of the operation rod 25d of one of the third jaws 25. Therefore, the structure of the chuck unit 8 is made simple since the operation rod 25d may be located at one of the three third jaws 25, that is, only one may be located at the chuck unit 8.

On this occasion, the workpiece holding member 25, 40 are moved and driven in the direction as shown by the arrows C and D which is the radial direction with respect to the member moving mechanism of Fig.1 provided between the sliding member 21 and the workpiece holding members 25, 40, such as 22, 23 and 25a. In addition to this structure, the member moving mechanism may move together with the workpiece holding members 25, 40 with respect to the sliding member 21 as shown in Fig.20.

Furthermore, in an another structure, the center 15 may be provided together with the coil spring 16 in a sliding cylinder 300 which is free to move and drive in the axial center CT2 direction through a cylinder 301, the sliding cylinder 300 may be provided free to be fixed by the fixing means 54b, similar to the fixing means 54b of the piston rod 58 for driving the workpiece holding rod 59, and a workpiece end face abutting face 300a in the shape of a panel may be formed at right angles with respect to the axial center CT2 at the top end of the sliding cylinder 300.

The workpiece end face abutting face 300a is provided, thereby the top end portion 7b of the workpiece 7 after finishing the first routine of machining can be positioned, abutting on the workpiece end face abutting face 300a. By doing so, the workpiece 7 can be certainly supported by the chuck unit 8 with the workpiece holding members 25, 40 and the workpiece end face abutting portion 300a.

On this occasion, various kinds of supply methods are thinkable concerning supply of the working fluid for driving, fixing and holding the piston rod 58 of the workpiece holding rod 59 of the respective workpiece holding members 25, 40, such as oil pressure and air pressure. For instance, the working fluid may be charged in the cylinder 25b in the respective workpiece holding members 25, 40 as shown in Fig.1, it may be supplied from an outside through the operating jig 27 or the like as shown in Fig.14, or a supply passage of the working fluid may be provided in the chuck unit 8 so as to supply from an outside through the chuck unit 8.

The present invention is explained on the basis of the embodiment heretofore. The embodiments which are described in the present specification are illustrative and not limiting. The scope of the invention is designated by the accompanying claims and is not restricted by the descriptions of the specific embodiments.

## Claims

1. A chuck unit for a machine tool, capable of holding a workpiece (7) installed on a spindle (9) rotating around an axial center axis (CT2); comprises:
- a main body (11) which rotates around the axial center axis (CT2) and can be shifted and positioned along the axial center axis (CT2); two or more sliding members (21) which are provided on the main body (11) and can be shifted and positioned in a radial direction (C, D) with respect to the axial center axis (CT2) of the main body (11), and sliding member driving means (20) for driving these two or more sliding members (21);
- a workpiece holding member (40) provided on the each sliding member (21), moving together with the sliding member (21);
- a plurality of workpiece holding rods (58) which are provided on the workpiece holding member (40) and can be shifted and positioned along the axial center axis (CT2), and a cylinder (55) for driving these workpiece holding rods (58),
- outside fluid supply means (61, 62, 45, 49) which are connected with the cylinder and supply the cylinder with a fluid for driving the workpiece holding rods (58) from an outside;
- fixing means (56, 57) of the workpiece holding rods (58) provided at the workpiece holding rods (58);
- a working fluid supply means (42, 45, 63) which is connected with the fixing means (56, 57) and operates the fixing means (56, 57);
- **characterized in that** the cylinders (55) of the respective workpiece holding members (40) are in communication and are connected with each other via the respective workpiece holding members (40); and
- that the fixing means (56, 57) of the respective workpiece holding members (40) are in communication and are connected with each other via the respective workpiece holding members (40).

2. The chuck unit for machine tool as set forth in claim 1, **characterized in that** the outside fluid supply means (61, 62, 45, 49) have a valve means (45, 48, 49) for changing supply of the fluid for driving workpiece holding rod (58) with respect to the cylinder (55), and that the valve means also serves as the working fluid supply means (42, 45, 47, 63).

3. The chuck unit for machine tool as set forth in claim 1, **characterized in that** the outside fluid supply means (61, 62, 45, 49) and the working fluid supply (42, 45, 47, 63) means for operating the fixing means (56, 57) are provided at only one of the workpiece holding members (40) installed on the main body (11).

4. The chuck unit for machine tool as set forth in claim 1, **characterized in that** the workpiece holding member (40) and a sliding member (21, 22) are unitedly formed with each other.

## Patentansprüche

1. Eine auf einer um eine axiale Mittelachse (CT2) rotierenden Spindel (9) angeordnete Spindelfuttereinheit für eine Werkzeugmaschine, geeignet, ein Werkstück (7) zu halten, aufweisend:
- einen Hauptteil (11), welcher um die axiale Mittelachse (CT2) rotiert und entlang der axialen Mittelachse (CT2) verschoben und positioniert werden kann; zwei oder mehr Verschiebestücke (21), welche auf dem Hauptteil (11) angeordnet sind und in einer radialen Richtung (C, D) bezüglich der axialen Mittelachse (CT2) des Hauptteils (11) verschoben und positioniert werden können, und Verschiebestückantriebsmittel (20) zum Antreiben der zwei oder mehr Verschiebestücke (21);
- ein auf jedem der Verschiebestücke (21) angeordnetes Werkstückhalteteil (40), welches sich zusammen mit dem Verschiebestück (21) bewegt;
- eine Vielzahl an Werkstückhaltefingern (58), welche auf dem Werkstückhalteteil (40) angeordnet sind und entlang der axialen Mittelachse (CT2) verschoben und positioniert werden können, und einen Zylinder (55) zum Antreiben der Werkstückhaltefinger (58),
- äußere Fluidzuführmittel (61, 62, 45, 49), welche mit dem Zylinder verbunden sind und den Zylinder mit einem Fluid zum Antreiben der Werkstückhaltefinger (58) von einer Außenseite versorgen;
- Befestigungsmittel (56, 57) der Werkstückhaltefinger (58), angeordnet an den Werkstückhaltefingern (58);
- ein Arbeitsfluidzuführmittel (42, 45, 63), welches mit den Befestigungsmitteln (56, 57) verbunden ist und die Befestigungsmittel (56, 57) betätigt;
- **dadurch gekennzeichnet, dass** die Zylinder (55) der entsprechenden Werkstückhalteteile (40) in Kommunikation sind und über die entsprechenden Werkstückhalteteile (40) miteinander verbunden sind; und
- dass die Befestigungsmittel (56, 57) der entsprechenden Werkstückhalteteile (40) in Kommunikation sind und über die entsprechenden Werkstückhalteteile (40) miteinander verbunden sind.

2. Die Spindelfuttereinheit für eine Werkzeugmaschine wie in Anspruch 1 dargelegt, **dadurch gekennzeichnet, dass** die äußeren Fluidzuführmittel (61, 62, 45, 49) Ventilmittel (45, 48, 49) zum Wechseln der Zufuhr des Fluids zum Antreiben der Werkstückhaltefinger (58) in Bezug auf den Zylinder (55) aufweisen, und dass die Ventilmittel zudem als das Arbeitsfluidzuführmittel (42, 45, 47, 63) dienen.

3. Die Spindelfuttereinheit für eine Werkzeugmaschine wie in Anspruch 1 dargelegt, **dadurch gekennzeichnet, dass** die äußeren Fluidzuführmittel (61, 62, 45, 49) und die Arbeitsfluidzuführung (42, 45, 47, 63) zur Betätigung des Befestigungsmittels (56, 57) nur an einem der an dem Hauptteil (11) angeordneten Werkstückhalteteilen (40) vorgesehen sind.

4. Die Spindelfuttereinheit für eine Werkzeugmaschine wie in Anspruch 1 dargelegt, **dadurch gekennzeichnet, dass** das Werkstückhalteteil (40) und ein Verschiebestück (21, 22) einheitlich miteinander ausgebildet sind.

## Revendications

1. Mandrin pour une machine-outil, capable de maintenir une pièce à usiner (7) montée sur une broche (9) tournant autour d'un axe central axial (CT2) ; du type comprenant :
- un corps principal (11) qui tourne autour de l'axe central axial (CT2) et qui peut être déplacé et positionné le long de l'axe central axial (CT2) ; deux ou plusieurs membres coulissants (21) qui sont prévus sur le corps principal (11) et qui peuvent être déplacés et positionnés suivant une direction radiale (C, D) par rapport à l'axe central axial (CT2) du corps principal (11), et des moyens d'entraînement (20) du membre coulissant pour entraîner ces deux ou plusieurs membres coulissants (21) ;
- un élément de retenue (40) de la pièce à usiner prévu sur chacun des membres coulissants (21) et qui bouge conjointement avec le membre coulissant (21) ;
- une pluralité de tiges de retenue (58) de la pièce à usiner prévues sur l'élément de retenue (40) de la pièce à usiner et qui peuvent être déplacées et positionnées le long de l'axe central axial (CT2), et un cylindre (55) d'entraînement de ces tiges de retenue (58) de la pièce à usiner,
- des moyens d'alimentation (61, 62, 45, 49) en fluide extérieurs qui sont reliés au cylindre et alimentent le cylindre en un fluide pour entraîner les tiges de retenue (58) de la pièce à usiner depuis l'extérieur ;
- des moyens de fixation (56, 57) des tiges de retenue (58) de la pièce à usiner prévus sur les tiges de retenue (58) de la pièce à usiner ;
- un moyen d'alimentation (42, 45, 63) en fluide de travail qui est relié aux moyens de fixation (56, 57) et qui actionne les moyens de fixation (56, 57) ;
- **caractérisé en ce que** les cylindres (55) des éléments de retenue (40) de la pièce à usiner respectifs communiquent entre eux et sont reliés les uns aux autres par l'intermédiaire des éléments de retenue (40) de la pièce à usiner respectifs.

2. Mandrin pour machine outil selon la revendication 1, **caractérisé en ce que** les moyens d'alimentation (61, 62, 45, 49) en fluide extérieurs ont une valve (45, 48, 49) pour changer l'alimentation en fluide pour entraîner la tige de retenue (58) de la pièce à usiner par rapport au cylindre (55) et que la valve sert aussi de moyen d'alimentation (42, 45, 47, 63) en fluide de travail.

3. Mandrin pour machine outil selon la revendication 1, **caractérisé en ce que** les moyens d'alimentation (61, 62, 45, 49) en fluide extérieurs et les moyens d'alimentation en fluide de travail (42, 45, 47, 63) pour actionner les moyens de fixation (56, 57) sont prévus sur au moins un des éléments de retenue (40) de la pièce à usiner montés sur le corps principal (11).

4. Mandrin pour machine outil selon la revendication 1, **caractérisé en ce que** l'élément de retenue (40) de la pièce à usiner et un membre coulissant (21, 22) sont réalisés d'un seul tenant.
